# EUROPÄISCHE PATENTSCHRIFT

(11) **EP 2 409 192 B1**
(45) Veröffentlichungstag und Bekanntmachung des Hinweises auf die Patenterteilung: **30.03.2016**
(21) Anmeldenummer: 09796312.8
(22) Anmeldetag: 16.12.2009
(51) Int. Cl.: G02B 6/44

(54) **PATCH-PANEL FÜR EINEN OPTISCHEN VERTEILER**
PATCH PANEL FOR AN OPTICAL DISTRIBUTOR
PANNEAU DE CONNEXION POUR UN RÉPARTITEUR OPTIQUE

(30) Priorität: 16.03.2009 DE 102009013299
(43) Veröffentlichungstag der Anmeldung: 25.01.2012
(73) Patentinhaber: Tyco Electronics Services GmbH, 8200 Schaffhausen (CH)
(72) Erfinder: ADOMEIT, Jörg, 12307 Berlin (DE); FELTGEN, Reinhard, 52477 Alsdorf (DE)
(74) Vertreter: Patentanwälte Bressel und Partner mbB
(86) Internationale Anmeldenummer: PCT/EP2009/009034
(87) Internationale Veröffentlichungsnummer: WO 2010/105651

(56) Entgegenhaltungen:
- EP-A- 0 943 944
- WO-A-99/42881
- DE-U1-202007 005 870
- US-A1- 2002 125 800
- US-A1- 2005 111 809

## Beschreibung

Die Erfindung betrifft ein Patch-Panel für einen optischen Verteiler, umfassend ein Gehäuse, an dessen Frontseite eine Frontplatte mit Kupplungen oder Adaptern für optische Steckverbinder angeordnet ist.

Optische Verteiler (ODF - Optical Distribution Frame) umfassen einen Rahmen oder eine ähnliche Aufnahme, in dem Patch-Panels übereinander angeordnet werden können. Dabei besteht das Bedürfnis einer hohen Packungsdichte bei guter Handhabbarkeit. Dabei stellt die Höhe eine Begrenzung dar, d.h. die Anzahl der einbaubaren Patch-Panele übereinander ist beschränkt.

Eine gattungsgemäße Vorrichtung wird in der Druchschrift US 2002/125800 A1 beschrieben.

Der Erfindung liegt das technische Problem zugrunde, ein Patch-Panel zu schaffen, das eine höhere Packungsdichte aufweist.

Die Lösung des technischen Problems ergibt sich durch die Gegenstände mit den Merkmalen des Anspruchs 1. Weitere vorteilhafte Ausgestaltungen der Erfindung ergeben sich aus den Unteransprüchen.

Hierzu umfasst das Patch-Panel für einen optischen Verteiler ein Gehäuse, an dessen Frontseite eine Frontplatte mit Kupplungen oder Adaptern für optische Steckverbinder angeordnet ist, wobei vor der Frontplatte eine zweite Frontplatte mit Kupplungen oder Adaptern für optische Steckverbinder angeordnet ist, wobei die zweite Frontplatte schwenkbar zur ersten Frontplatte ausgebildet ist und wobei vorzugsweise die zweite Frontplatte in einer parallelen Ebene zur Ebene der ersten Frontplatte angeordnet ist. Hierdurch wird die Packungsdichte quasi verdoppelt, wobei die Bauraumzunahme nach vorne zur Vorderseite weniger kritisch ist.

Entsprechend der Erfindung ist die erste Frontplatte an einer Kassette befestigt, wobei die Kassette an dem Gehäuse verschiebbar oder schwenkbar angeordnet ist. Hierdurch werden beispielsweise die Kupplungen oder Adapter der ersten Frontplatte von der Rückseite zugänglich, so dass optische Stecker gesteckt oder gereinigt werden können. Des Weiteren werden auch rückwärtig angeordnete weitere Einrichtungen zugänglich.

In einer bevorzugten Ausführungsform weist die Kassette eine Bodenplatte auf, wobei auf der Bodenplatte optische Verteiler- und/oder Anschlusselemente, wie insbesondere Spleißkassetten, angeordnet sind.

In einer weiteren bevorzugten Ausführungsform ist die Bodenplatte über die Frontplatte verlängert, so dass sich vor der ersten Frontplatte eine Ablagefläche bildet. Die Ablagefläche dient dabei primär, die Fasern oder Kabel der von der Vorderseite in die Kupplungen oder Adapter gesteckten optischen Stecker zu halten, so dass diese nicht durchhängen. Dabei muss die Bodenplatte, insbesondere vor der Frontplatte, nicht als durchgängige Platte ausgebildet sein, sondern kann auch Löcher oder Schlitze aufweisen oder aber beispielsweise als Drahtgitter ausgebildet sein.

In einer weiteren bevorzugten Ausführungsform ist an einer Oberkante der zweiten Frontplatte ein plattenförmiges Element angeordnet, das parallel zur Bodenplatte verläuft. An diesem plattenförmigen Element können die rückwärtigen Fasern oder Kabel der zweiten Frontplatte befestigt werden. Des Weiteren ist es möglich, das Schwenklager durch dieses plattenförmige Element zu führen. Zusätzlich wirkt das plattenförmige Element als Abdeckung für die Kupplungen oder Adapter der ersten Frontplatte.

In einer weiteren bevorzugten Ausführungsform ist an einer Unterkante der zweiten Frontplatte ein weiteres plattenförmiges Element angeordnet, das sich parallel zum ersten plattenförmigen Element in Richtung der Vorderseite erstreckt. Hierdurch wird wieder eine Ablage für die Fasern oder Kabel geschaffen. Bezüglich der Ausbildung des ersten und/oder des zweiten plattenförmigen Elements kann auf die Bodenplatte verwiesen werden, d.h. diese können auch gelöchert, geschlitzt oder mit anderen Öffnungen ausgebildet sein.

In einer weiteren bevorzugten Ausführungsform sind die erste und die zweite Frontplatte jeweils gleich hoch und deckungsgleich, wobei die Kupplungen oder Adapter in der zweiten Frontplatte höhenversetzt zu den Kupplungen oder Adaptern der ersten Frontplatte angeordnet sind. Vorzugsweise sind dabei die beiden Frontplatten eine Höheneinheit hoch. Dabei sei angemerkt, dass es prinzipiell auch möglich ist, dass die Frontplatten jeweils Vielfache der Höheneinheit hoch sind und mehrere Reihen von Kupplungen oder Adaptern aufweisen oder aber einen Bruchteil einer Höheneinheit hoch sind. Durch den Höhenversatz der Kupplungen oder Adapter der zweiten Frontplatte laufen die Fasern oder Kabel der rückwärtigen Stecker der zweiten Frontplatte in einer parallel verschobenen Ebene zu den Fasern oder Kabeln der frontseitigen Stecker der ersten Frontplatte, so dass sich diese weniger stören.

In einer weiteren bevorzugten Ausführungsform sind die Fasern oder Kabel der rückwärtigen Stecker der zweiten Frontplatte durch eine Öffnung der ersten Frontplatte oder durch eine Öffnung zwischen erster Frontplatte und Seitenwand geführt, von wo aus diese beispielsweise zu den Verteiler- und/oder Anschlusselementen auf der Bodenplatte geführt werden können.

In einer weiteren bevorzugten Ausführungsform sind die Fasern zwischen den Kupplungen oder Adaptern bis zu einem Drehpunkt eines Schwenklagers fixiert.

In einer weiteren bevorzugten Ausführungsform sind die Fasern hinter der ersten Frontplatte fixiert, so dass die Fasern nur im Bereich des Drehpunktes beweglich sind, um die Schwenkbewegung auszugleichen.

Die Erfindung wird nachfolgend anhand eines bevorzugten Ausführungsbeispieles näher erläutert. Die Fig. zeigen:
- Fig. 1: eine perspektivische Vorderansicht eines Patch-Panels für einen optischen Verteiler,
- Fig. 2: eine perspektivische Vorderansicht des Patch-Panels mit ausgezogener Kassette,
- Fig. 3: eine perspektivische Vorderansicht des Patch-Panels mit aufgeschwenkter zweiter Frontplatte und eingezogener Kassette,
- Fig. 4: eine perspektivische Vorderansicht des Patch-Panels mit ausgezogener Kassette und aufgeschwenkter zweiter Frontplatte und
- Fig. 5: eine perspektivische Seitenansicht mit teilweise aufgeschwenkter zweiter Frontplatte und eingezogener Kassette.

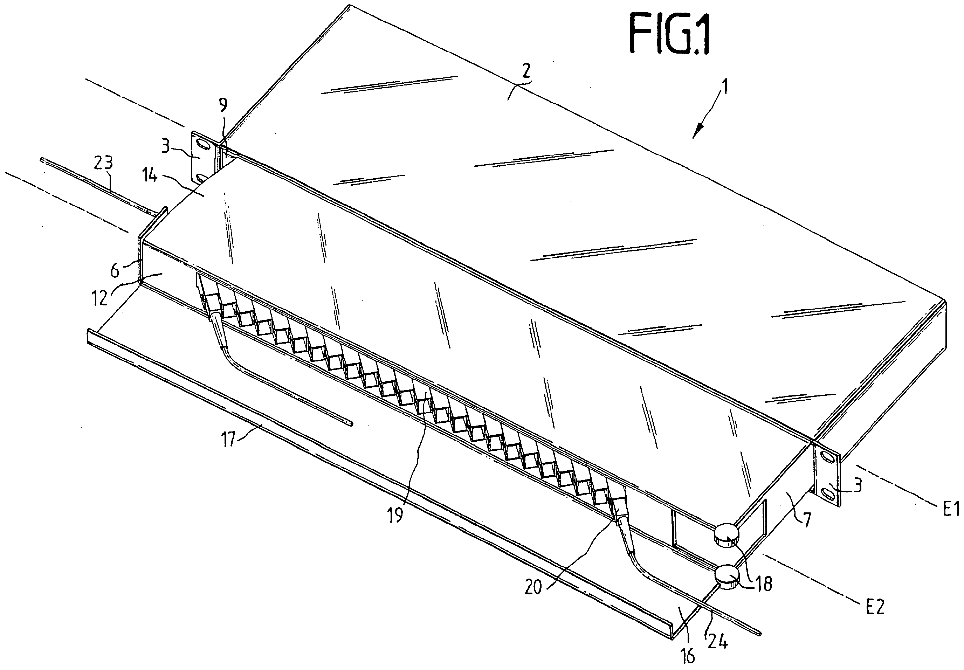

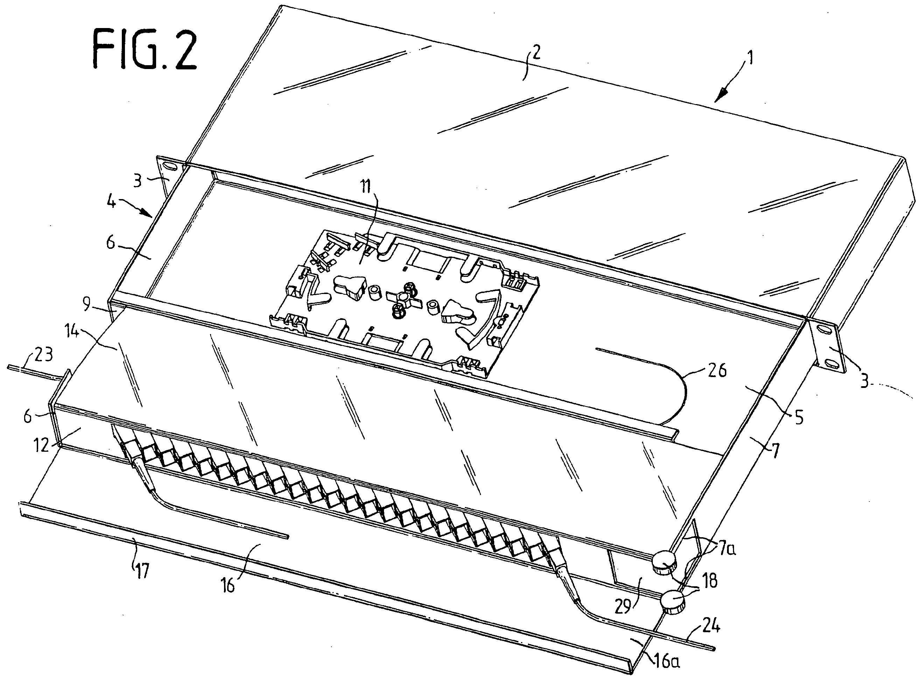

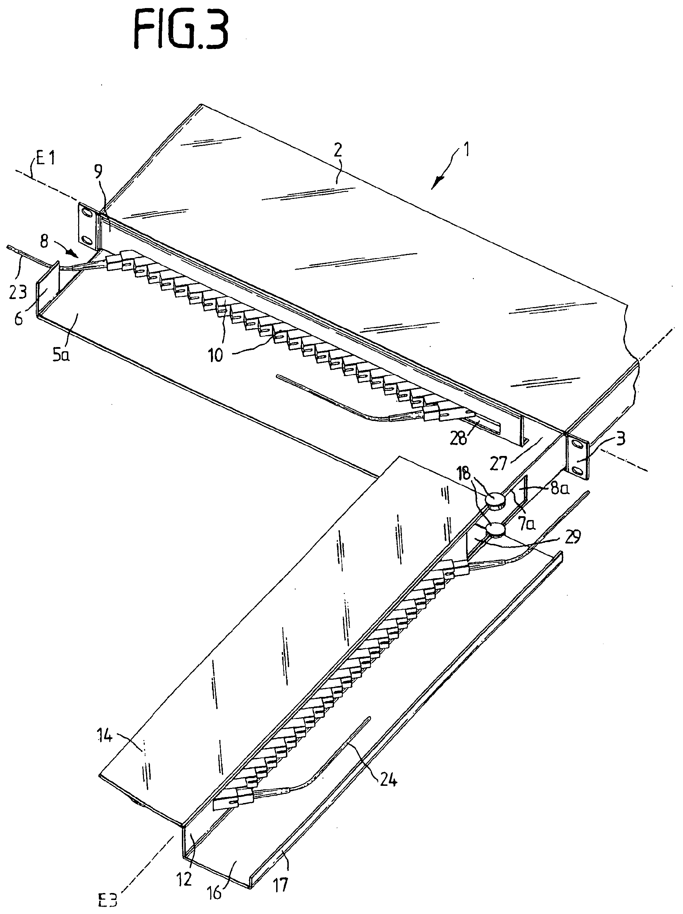

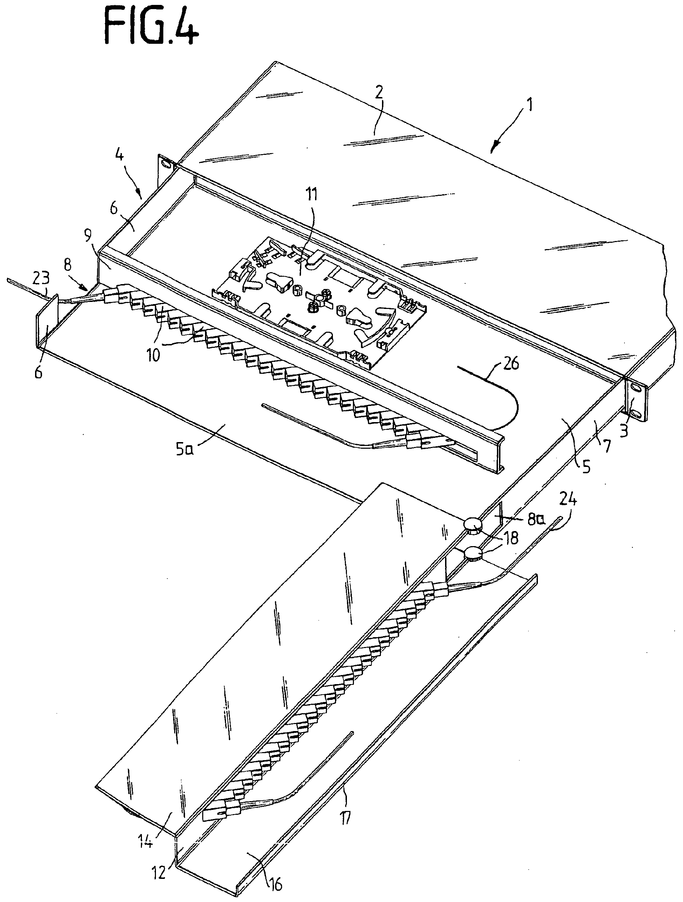

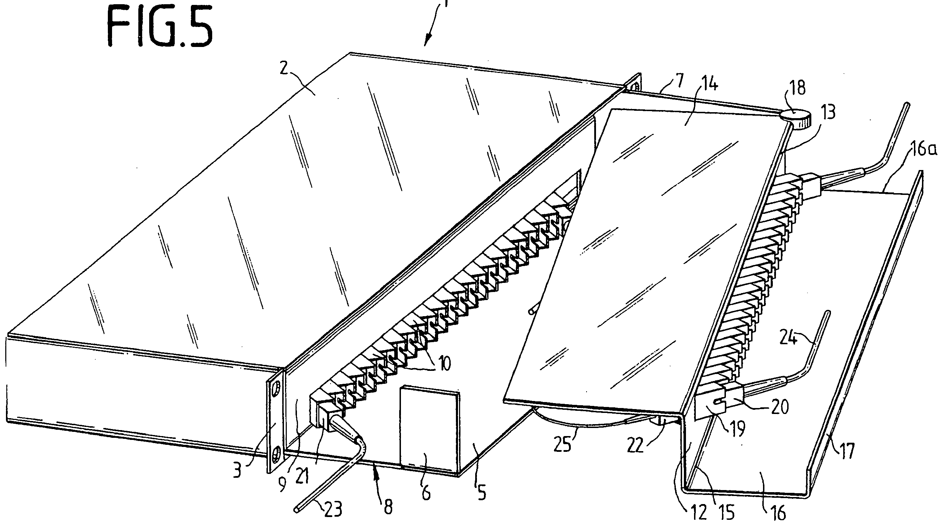

In den Fig. 1 bis 5 ist ein Patch-Panel 1 für einen optischen Verteiler in verschiedenen Arbeitsstellungen dargestellt. Das Patch-Panel 1 umfasst ein Gehäuse 2, an dem seitlich jeweils ein Befestigungselement 3 zur Befestigung an einem nicht dargestellten Rahmengestell angeordnet sind. In dem Gehäuse 2 ist eine ausziehbare Kassette 4 angeordnet, die beispielsweise in den Fig. 2 und 4 im herausgezogenen Zustand dargestellt ist. Die Kassette 4 umfasst eine Bodenplatte 5 sowie Seitenwände 6, 7, wobei die Seitenwand 6 einen Freischnitt 8 (Fig. 3 bis 5) und die Seitenwand 7 einen Freischnitt 8a aufweist. Durch den Freischnitt 8a werden an der Seitenwand 7 zwei Stege 7a gebildet. An der Seitenwand 6 sowie der Bodenplatte 5 ist eine erste Frontplatte 9 angeordnet (siehe Fig. 4), die im eingezogenen Zustand der Kassette 4 mit den Gehäusekanten des Gehäuses 2 abschließt. Die Bodenplatte 5 steht dabei über die Frontplatte 9 hinaus und bildet eine Ablagefläche 5a. Auch die Seitenwände 6, 7 sind über die Frontplatte 9 hinaus verlängert. Die erste Frontplatte 9 weist eine oder mehrere in einer ersten Reihe nebeneinander liegende Öffnungen 28 auf, in die Kupplungen 10 in einem Winkel von ca. 45° gesteckt sind. In die Kupplungen 10 können sowohl von der Vorderseite als auch von der Rückseite der ersten Frontplatte 9 optische Stecker 21 (siehe Fig. 5) eingesteckt werden. Auf der Bodenplatte 5 im Bereich hinter der ersten Frontplatte 9 bzw. auf der Rückseite der Frontplatte 9 ist beispielsweise eine Spleißkassette 11 angeordnet (Fig. 2 und 4).

Des Weiteren umfasst das Patch-Panel 1 eine zweite Frontplatte 12, an deren Oberkante 13 ein erstes plattenförmiges Element 14 angeordnet ist, das parallel zur Bodenplatte 5 verläuft (siehe Fig. 5). An einer Unterkante 15 der zweiten Frontplatte 12 ist ein zweites plattenförmiges Element 16 angeordnet, das sich nach vorne erstreckt und in der gleichen Ebene wie die Bodenplatte 5 liegt. Das zweite plattenförmige Element 16 weist eine nach oben gerichtete Abkantung 17 auf, die wiederum parallel zur Frontplatte 12 ausgerichtet ist. Auch die Frontplatte 12 ist schmaler als die plattenförmigen Elemente 14 und 16, so dass eine Öffnung 29 gebildet wird. Über ein Schwenklager 18 ist die zweite Frontplatte 12 über zwei sich gegenüberliegende Drehpunkte schwenkbar an der Seitenwand 7 angelenkt, wobei die Anbindung an die Seitenwand 7 über die beiden Stege 7a mit den beiden plattenförmigen Elementen 14, 16 erfolgt. Die zweite Frontplatte 12 weist ebenfalls eine oder mehrere in einer zweiten Reihe nebeneinander liegende Öffnungen für Kupplungen 19 auf, die ebenfalls in einem Winkel von ca. 45° ausgestellt sind, wobei jedoch die Kupplungen 10 der ersten Frontplatte 9 um 90° zu den Kupplungen 19 der zweiten Frontplatte 12 gedreht sind, so dass die Kupplungen 10 der ersten Frontplatte 9 nach links in Richtung des Freischnittes 8 und die Kupplungen 19 der zweiten Frontpatte 12 nach rechts zur rechten Seitenkante 16a gerichtet sind. Des Weiteren liegen die Kupplungen 19 in der zweiten Frontplatte 12 näher an der Oberkante 13, die erste und zweite Reihe von Kupplungen 10, 19 sind also zueinander höhenversetzt.

Wie bereits erwähnt, können in die Vorderseite und Rückseite der Kupplungen 10, 19 optische Stecker 20, 21, 22 eingesteckt werden. Dabei sind beispielsweise die Stecker 20, 21, die in die Vorderseite der Kupplungen 10, 19 eingesteckt sind, Bestandteil eines Patchkabels 23, 24, wohingegen die Stecker 22, die von der Rückseite eingesteckt sind, Bestandteil eines Pigtail-Kabels 25, 26 (siehe Figuren 4 und 5) sind. Die Pigtail-Kabel 25 der Kopplungen 19 sind vorzugsweise an dem plattenförmigen Element 14 befestigt, beispielsweise an Haken eingehängt. Vor der Kupplung 19 werden die Pigtail-Kabel 25 bzw. -Fasern durch eine Öffnung 28 in der Frontplatte 9 oder seitlich an dieser vorbei zu den Spleißkassetten 11 geführt. Im dargestellten Ausführungsbeispiel (siehe Fig. 3) ist die erste Frontplatte 9 schmaler als die Bodenplatte 5, so dass sich zwischen Frontplatte 9 und Seitenwand 7 eine Öffnung 27 für die Fasern bildet, durch die dann alternativ die Fasern geführt werden können. Da die zweite Reihe der Kupplungen 19 höher in der zweiten Frontplatte 12 liegen als die erste Reihe von Kupplungen 10 in der ersten Frontplatte 9, verlaufen die Fasern der Pigtails 25 von den Kupplungen 19 über den Patchkabeln 23 der Kupplungen 10.

In Fig. 1 ist das Patch-Panel 1 in einer ersten Arbeitsstellung gezeigt, wobei die Kassette 4 (Fig. 2) in das Gehäuse 2 eingeschoben ist. Die zweite Frontplatte 12 liegt in einer Ebene E2 parallel zur Ebene E1 der ersten Frontplatte 9. Die Patchkabel 24 der zweiten Frontplatte 12 werden nach rechts zur rechten Seitenkante 16a weggeführt, während die Patchkabel 23 der ersten Frontplatte 9 nach links durch den Freischnitt 8 (Fig. 3) herausgeführt werden, entsprechend den Schrägstellungen der Kupplungen 10. Die beiden Frontplatten 9, 12 sind genau eine Höheneinheit hoch und zueinander deckungsgleich angeordnet, d.h. das Patch-Panel 1 ist genauso hoch wie ein Patch-Panel gemäß dem Stand der Technik. Allerdings ist das Patch-Panel 2 tiefer, nämlich um die Tiefe des ersten plattenförmigen Elements 14 und des zweiten plattenförmigen Elements 16. In dieser ersten Arbeitsstellung sind nur die Patchkabel 24 mit den in der zweiten Frontplatte 12 angeordneten optischen Steckern 20 zugänglich.

In der Fig. 2 ist eine zweite Arbeitsstellung dargestellt, wobei die Kassette 4 aus dem Gehäuse 2 herausgezogen ist. In dieser Stellung sind zusätzlich noch die Spleißkassetten 11 sowie die Pigtail-Kabel 25, 26 zugänglich, wobei die Pigtail-Kabel 25 in Figur 5 dargestellt sind. Weiter sind auch die in der ersten Frontplatte 5 aufgenommenen Kupplungen 10 von der Rückseite her zugänglich.

In der Fig. 3 und Fig. 5 ist eine dritte Arbeitsstellung dargestellt, bei der die zweite Frontplatte 12 in eine Ebene E3 senkrecht zur ersten Frontplatte 9 herausgeschwenkt ist. In dieser Stellung sind die Patchkabel 23 mit den optischen Steckern 21 zugänglich, die in Kupplungen 10 der ersten Frontplatte 9 angeordnet sind. Auch sind in dieser Stellung die in der zweiten Frontplatte 14 angeordneten Kupplungen 19 von der Rückseite mit ihren Steckern 22 zugänglich.

In Fig. 4 ist eine vierte Arbeitsstellung dargestellt, bei der sowohl die Kassette 4 herausgezogen ist als auch die zweite Frontplatte 12 in die Ebene E3 geschwenkt ist. In dieser Arbeitsstellung ist alles frei zugänglich. Dabei sei angemerkt, dass die Ebene E3 nicht senkrecht zur Ebene E1 stehen muss, sondern auch einen kleineren oder auch größeren Winkel einschließen kann. Weiter sei angemerkt, dass das Gehäuse 2 vorzugsweise an der Rückseite Öffnungen zur Zuführung von optischen Kabeln aufweist.

### Bezugszeichenliste

- 1: Patch-Panel
- 2: Gehäuse
- 3: Befestigungselement
- 4: Kassette
- 5: Bodenplatte
- 5a: Ablagefläche
- 6, 7: Seitenwände
- 7a: Stege
- 8: Freischnitt
- 8a: Freischnitt
- 9: Frontplatte
- 10: Kupplungen
- 11: Spleißkassette
- 12: Frontplatte
- 13: Oberkante
- 14: plattenförmiges Element
- 15: Unterkante
- 16: plattenförmiges Element
- 16a: rechte Seitenkante
- 17: Abkantung
- 18: Schwenklager
- 19: Kupplungen
- 20, 21, 22: optische Stecker
- 23, 24: Patchkabel
- 25, 26: Pigtail-Kabel
- 27: Öffnung
- 28: Öffnungen
- 29: Öffnung

- E1, E2, E3: Ebenen

## Patentansprüche

1. Patch-Panel (1) für einen optischen Verteiler, umfassend ein Gehäuse (2), an dessen Frontseite eine Frontplatte (9) mit Kupplungen (10) oder Adaptern für optische Steckverbinder (21) angeordnet ist, wobei vor der Frontplatte (9) eine zweite Frontplatte (12) mit Kupplungen (19) oder Adaptern für optische Steckverbinder angeordnet ist, wobei die zweite Frontplatte (12) schwenkbar zur ersten Frontplatte (9) ausgebildet ist,
**dadurch gekennzeichnet, dass**
die erste Frontplatte (9) an einer Kassette (4) befestigt ist, wobei die Kassette (4) an dem Gehäuse (2) verschiebbar oder schwenkbar angeordnet ist.

2. Patch-Panel nach Anspruch 1, **dadurch gekennzeichnet, dass** die zweite Frontplatte (12) in einer parallelen Ebene (E2) zur Ebene (E1) der ersten Frontplatte (9) angeordnet ist.

3. Patch-Panel nach einem der Ansprüche 1 oder 2, **dadurch gekennzeichnet, dass** die Kassette (4) eine Bodenplatte (5) aufweist, wobei auf der Bodenplatte (5) optische Verteiler- und/oder Anschlusselemente angeordnet sind.

4. Patch-Panel nach Anspruch 3, **dadurch gekennzeichnet, dass** die Bodenplatte (5) über die Frontplatte (9) verlängert ist, so dass sich vor der ersten Frontplatte (9) eine Ablagefläche (5a) bildet.

5. Patch-Panel nach einem der Ansprüche 3 oder 4, **dadurch gekennzeichnet, dass** an einer Oberkante (13) der zweiten Frontplatte (12) ein plattenförmiges Element (14) angeordnet ist, das parallel zur Bodenplatte (5) verläuft.

6. Patch-Panel nach Anspruch 5, **dadurch gekennzeichnet, dass** an einer Unterkante (15) der zweiten Frontplatte (12) ein weiteres plattenförmiges Element (16) angeordnet ist, das sich parallel zum ersten plattenförmigen Element (14) in Richtung der Vorderseite erstreckt.

7. Patch-Panel nach einem der vorangegangenen Ansprüche, **dadurch gekennzeichnet, dass** die erste und zweite Frontplatte (9, 12) jeweils gleich hoch und deckungsgleich sind, wobei die Kupplungen (19) oder Adapter der zweiten Frontplatte (12) höhenversetzt zu den Kupplungen (10) oder Adaptern der ersten Frontplatte (9) angeordnet sind.

8. Patch-Panel nach einem der vorangegangenen Ansprüche, **dadurch gekennzeichnet, dass** die Fasern der rückwärtigen Stecker (22) der zweiten Frontplatte (12) durch eine Öffnung (28) der ersten Frontplatte (9) oder seitlich durch eine Öffnung (27) zwischen der Frontplatte (9) und einer Seitenwand (7) der Kassette (4) geführt sind.

9. Patch-Panel nach Anspruch 8, **dadurch gekennzeichnet, dass** die Fasern der rückwärtigen Stecker (22) der zweiten Frontplatte (12) zwischen den Kupplungen oder Adaptern bis zu einem Drehpunkt eines Schwenklagers (18) der zweiten Frontplatte (12) fixiert sind.

10. Patch-Panel nach Anspruch 8 oder 9, **dadurch gekennzeichnet, dass** die Fasern der rückwärtigen Stecker (22) der zweiten Frontplatte (12) hinter der ersten Frontplatte (9) fixiert sind.

## Claims

1. A patch panel (1) for an optical distribution frame, comprising a housing (2) on whose front face a front panel (9) is arranged having couplings (10) or adapters for optical plug connectors (21),
a second front panel (12) having couplings (19) or adapters for optical plug connectors is arranged in front of the front panel (9), wherein the second front panel (12) can pivot with respect to the first front panel (9), **characterized in that** the first front panel (9) is attached to a cassette (4), with the cassette (4) being arranged on the housing (2) such that it can be moved or pivoted.

2. The patch panel as claimed in claim 1, **characterized in that** the second front panel (12) is arranged on a plane (E2) parallel to the plane (E1) of the first front panel (9).

3. The patch panel as claimed in one of the preceding claims, **characterized in that** the cassette (4) has a base plate (5), with optical distribution frame and/or connecting elements being arranged on the base plate (5).

4. The patch panel as claimed in claim 3, **characterized in that** the base plate (5) is lengthened over the front panel (9) such that a stowage surface (5a) is formed in front of the first front panel (9).

5. The patch panel as claimed in claims 3 or 4, **characterized in that** an element (14) which is in the form of a plate and runs parallel to the base plate (5) is arranged on an upper edge (13) of the second front panel (12).

6. The patch panel as claimed in claim 5, **characterized in that** a further element (16) which is in the form of a plate is arranged on a lower edge (15) of the second front panel (12) and extends parallel to the first element (14) which is in the form of a plate, in the direction of the front face.

7. The patch panel as claimed in one of the preceding claims, **characterized in that** the first and the second front panel (9, 12) each have the same height and are coincident, with the couplings (19) or adapters of the second front panel (12) being arranged offset in height with respect to the couplings (10) or adapters of the first front panel (9).

8. The patch panel as claimed in one of the preceding claims, **characterized in that** the fibers of the rearward plugs (22) of the second front panel (12) are passed through an opening (28) in the first front panel (9) or at the side through an opening (27) between the front panel (9) and a side wall (7)of the cassette (4).

9. The patch panel as claimed in claim 10, **characterized in that** the fibers of the rearward plugs (22) of the second front panel (12) are fixed between the couplings or adapters as far as a rotation point of a pivoting bearing (18) of the second front panel (12).

10. The patch panel as claimed in claim 10 or 11, **characterized in that** the fibers of the rearward plugs (22) of the second front panel (12)are fixed behind the first front panel (9).

## Revendications

1. Panneau de connexion (1) pour un répartiteur optique, comprenant un boîtier (2), sur la face avant duquel est disposée une plaque frontale (9) avec des couplages (10) ou des adaptateurs pour des connecteurs optiques (21), dans lequel une deuxième plaque frontale (12) avec des couplages (19) ou des adaptateurs pour des connecteurs optiques est disposée devant la plaque frontale (9), dans lequel la deuxième plaque frontale (12) peut pivoter par rapport à la première plaque frontale (9), **caractérisé en ce que** la première plaque frontale (9) est fixée à une cassette (4), dans lequel la cassette (4) est disposée de façon coulissante ou pivotante sur le boîtier (2).

2. Panneau de connexion selon la revendication 1, **caractérisé en ce que** la deuxième plaque frontale (12) est disposée dans un plan (E2) parallèle au plan (E1) de la première plaque frontale (9).

3. Panneau de connexion selon l'une des revendications 1 ou 2, **caractérisé en ce que** la cassette (4) présente une plaque de fond (5), dans lequel des répartiteurs optiques et/ou des éléments de raccordement optiques sont disposés sur la plaque de fond (5).

4. Panneau de connexion selon la revendication 3, **caractérisé en ce que** la plaque de fond (5) est prolongée au-delà de la plaque frontale (9), de telle manière qu'il se forme une face de dépôt (5a) devant la première plaque frontale (9).

5. Panneau de connexion selon l'une des revendications 3 ou 4, **caractérisé en ce qu'**un élément en forme de plaque (14), qui est parallèle à la plaque de fond (5), est disposé sur un bord supérieur (13) de la deuxième plaque frontale (12).

6. Panneau de connexion selon la revendication 5, **caractérisé en ce qu'**un autre élément en forme de plaque (16), qui s'étend parallèlement au premier élément en forme de plaque (14) en direction de la face avant, est disposé sur un bord inférieur (5) de la deuxième plaque frontale (12).

7. Panneau de connexion selon l'une quelconque des revendications précédentes, **caractérisé en ce que** la première et la deuxième plaques frontales (9, 12) sont respectivement de même hauteur et de même étendue, dans lequel les couplages (19) ou les adaptateurs de la deuxième plaque frontale (12) sont disposés en position décalée en hauteur par rapport aux couplages (10) ou aux adaptateurs de la première plaque frontale (9).

8. Panneau de connexion selon l'une quelconque des revendications précédentes, **caractérisé en ce que** les fibres des connecteurs arrière (22) de la deuxième plaque frontale (12) sont guidées à travers une ouverture (28) de la première plaque frontale (9) ou latéralement à travers une ouverture (27) entre la plaque frontale (9) et une paroi latérale (7) de la cassette (4).

9. Panneau de connexion selon la revendication 8, **caractérisé en ce que** les fibres des connecteurs arrière (22) de la deuxième plaque frontale (12) sont fixées entre les couplages ou les adaptateurs jusqu'à un point de rotation d'un palier pivotant (18) de la deuxième plaque frontale (12).

10. Panneau de connexion selon la revendication 8 ou 9, **caractérisé en ce que** les fibres des connecteurs arrière (22) de la deuxième plaque frontale (12) sont fixées derrière la première plaque frontale (9).
